# DEMANDE DE BREVET EUROPEEN

(11) **EP 0 685 153 A1**
(43) Date de publication de la demande: **06.12.1995**
(21) Numéro de dépôt: 95108176.9
(22) Date de dépôt: 29.05.1995
(51) Int. Cl.: A01J 25/13

(54) **Moule à fromage**

(30) Priorité: 01.06.1994 FR 9406689
(71) Demandeur: Delacour, Frédéric, F-37000 Tours (FR)
(72) Inventeur: Delacour, Frédéric, F-37000 Tours (FR)
(74) Mandataire: Kügele, Bernhard

(57) **Abrégé**

La présente invention concerne un moule à fromage, et particulier, un moule à fromage à pâte pressée.

Le moule de l'invention comporte un corps (4) en un matériau microperforé sur lequel coulisse une ceinture (5) de masquage des microperforations au moins dans la zone où s'élabore la croûte du fromage. Lorsque l'on nettoye le moule, le déplacement de la ceinture sur le corps (4) permet de démasquer la zone couverte du coprs et de la nettoyer sous pression.

Application à l'industrie agro- alimentaire

## Description

La présente invention concerne un moule à fromage, et particulier, un moule à fromage à pâte pressée.

Depuis quelques années, l'industrie agro-alimentaire produit des fromages qui sont élaborés dans des moules rigides constitués en des matériaux plastiques microporeux.

Le calibrage du fromage est amélioré et sa manutention facilitée. De plus, il est possible de mieux contrôler la croissance bactérienne puisqu'on sait contrôler le taux surfacique des microperforations des parois des moules réalisés en matériaux plastiques.

Cependant, certaines phases de la fermentation de la pâte nécessiteraient moins d'oxygénation, notamment des bords du fromage en contact avec le moule, de façon à former une croûte de meilleure qualité. Or, une telle croûte permet de protéger le fromage avant sa consommation. Il s'agit donc d'un problème majeur.

Un besoin apparaît donc dans les techniques modernes de fabrication de fromages et notamment de fromages à pâtes pressées, pour que soit réalisé un moyen permettant, lors de l'opération de fabrication, quand le fromage est dans son moule, un meilleur contrôle de l'évolution de son acidité (pH).

La présente invention apporte une réponse à cette nécessité révélée de l'état de la technique contemporaine. En effet, elle concerne un moule à fromage du genre comportant au moins un corps réalisé en un matériau au moins localement microporeux. L'invention se caractérise notamment en ce que le moule comporte de plus un moyen pour masquer localement des microperforations du corps.

Selon un autre aspect de l'invention, le moyen de masquage local de microperforations comporte un moyen de déplacement de façon à, sur commande, déplacer le moyen de masquage, notamment lors du nettoyage du moule pour atteindre les microperforations masquées.

D'autres caractéristiques et avantages de la présente invention seront mieux compris à l'aide de la description et des dessins qui sont :
- la figure 1 : un schéma vu en deux demies coupes d'un moule selon un mode de réalisation de l'invention lors de deux phases de la fabrication d'un fromage ;
- la figure 2 : une coupe d'un détail du moule de la figure 1.

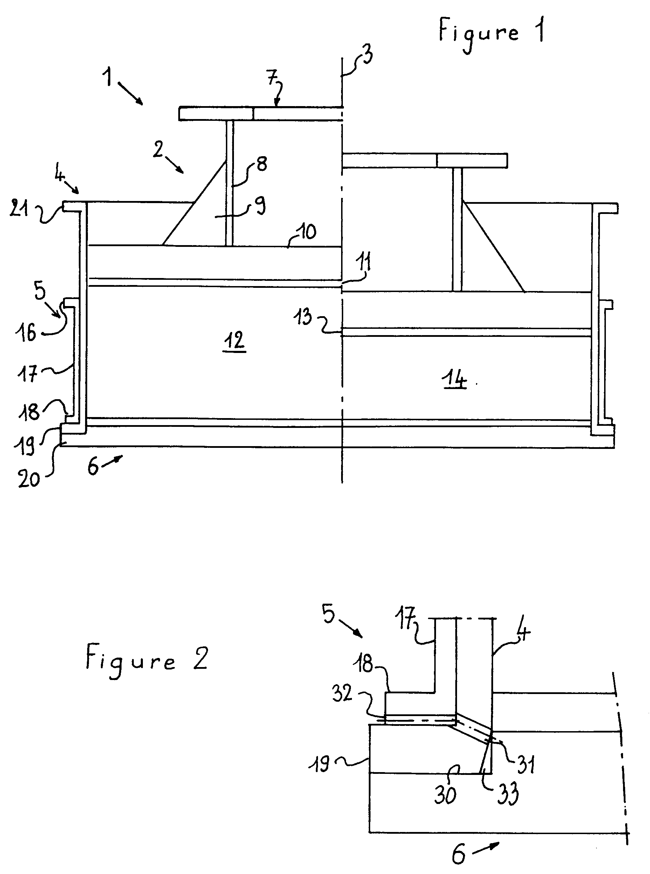

A la figure 1, on a représente un mode de réalisation d'un moule à fromage selon l'invention. La demie coupe à gauche correspond à l'état du moule au début de l'opération de pressage du lait tandis que la demie coupe à droite correspond à l'état du moule à la fin de l'opération de pressage du lait.

Le moule 1 comporte principalement une colonne 2, un corps annulaire 4, réalisé en un matériau microporeux, et un moyen 5 de masquage de microperforations du corps annulaire 4. L'ensemble de ces composants présente une symétrie axiale autour de l'axe 3.

Une base ou claie de support 6 ferme temporairement le fond du moule pendant cette étape de pressage dans le processus de fabrication.

Le pain de caillé est initialement introduit dans l'espace libre entre la claie 6 et la colonne 2, constituant une chambre de pressage 12, limitée par la surface supérieure de la claie 6, par la paroi intérieure du corps annulaire 4, et par la face inférieure d'une plaque de pressage 11 dans la position de la colonne 2 présentée au début de l'opération de pressage, dans la demie vue à gauche.

La colonne 2 comporte un alésage 7 à travers lequel la pressure dégagée à travers un piston d'appui 10 et la plaque de pressage 11 peut s'exprimer.

Selon l'invention, la paroi extérieure du corps annulaire 4 est entourée par un moyen 5 de masquage de microperforations pratiquées dans le matériau réalisant le corps annulaire 4. Dans le mode de réalisation de la figure 1, le moyen de masquage est constitué par une ceinture de formes adaptées à la paroi extérieure du corps annulaire 4 de sorte que, réalisée en un matériau étanche, la ceinture masque les microperforations du corps annulaire dans la zone devant laquelle la ceinture 5 est disposée.

On remarque, que selon une caractéristique de l'invention, la hauteur de la ceinture de masquage 5 est calculée de façon à ce que une partie non négligeable et déterminée du corps annulaire 4, au niveau de laquelle le pain de caillé est stocké dans la chambre 12, soit dégagée de la ceinture de masquage.

La pression est maintenue sur la colonne 2, de sorte que la pressure est exprimée particulièrement par des canaux (non représentés) dans l'épaisseur de la plaque de pression 11 et du piston 10. Quand la face intérieure de la plaque de pression atteint le niveau référencé 13 dans la demie coupe à droite de la figure 1, le fromage est entièrement pressé. On remarque que ce niveau est tel que la ceinture de masquage masque complètement la zone latérale du moule proprement dit 4 qui est en contact avec la croûte du fromage en élaboration. De ce fait, les microperforations de cette zone sont fermées et l'activation oxygénique est réduite.

De ce fait, le premier objet de l'invention est atteint sans nécessiter de moyens complexes.

De plus, on a disposé sur la ceinture un moyen de déplacement de la ceinture de façon à, sur commande, permettre d'atteindre les microperforations masquées par la ceinture. Dans un mode de réalisation préféré, la ceinture de masquage de l'invention est conçue de sorte qu'elle peut coulisser librement sur le corps 4, entre son rebord inférieur 19 et son rebord supérieur 21. De ce fait, comme le corps 4 est fixé pendant l'opération de pressage sur une claie 9 de pressage, lorsque l'on veut nettoyer le corps 4, il suffit de le démonter de la claie 9 et de le passer dans les appareils de lavage selon deux orientations différentes pour que, par simple gravité, une première moitié, puis une second moitié du corps 4, soient successivement lavées sous pression par exemple.

A cet effet, le moyen de déplacement de la ceinture de masquage comporte deux rebords réciproques, respectivement 16 destiné à venir en contact dans une première orientation sur le rebord 21, et 18 destiné à venir en contact dans une seconde orientation sur le rebord 19. Ces rebords permettent de ne pas avoir à démonter la ceinture avant le nettoyage, puis de ne pas avoir à remonter la ceinture sur le corps après le nettoyage, ce qui réduit la durée du nettoyage. Selon les processus de fabrication du fromage, les rebords 16 et 18 peuvent être saisis par une machine ou à la main et être amenés de sorte à changer la zone de masquage, ou à démasquer la zone masquée des microperforations.

La ceinture de masquage présente un corps 17 qui épouse aussi strictement que possible la face extérieure du corps 4. Elle peut être réalisée en une seule pièce ouverte radialement et, étant réalisée en plastique étanche, relativement souple, elle est initialement écartée autour d'un diamètre du corps 4 pour y être installée. Puis, on vient lier des brides de serrage qui ajustent en permanence la ceinture de masquage 5 sur le corps 4.

Dans un autre mode de réalisation, corps 4 et ceinture 5 sont réalisés chacun en deux moitiés, ou en deux parties, qui sont séparées par un plan perpendiculaire à l'axe 3. Les deux parties sont limitées par des rebords réciproques 16 et 21, d'une part, et 18 et 19, d'autre part. Une première partie de ceinture est montée sur la partie du moule qui lui correspond et la seconde partie de ceinture est ensuite montée sur la partie de moule qui lui correspond. Enfin, les deux parties du corps 4 sont soudées l'une à l'autre et les deux parties de la ceinture 5 sont soudées l'une à l'autre, notamment par une soudure à ultrasons.

D'autres procédés de liaison des parties de ceinture et/ ou de corps sont envisageables, comprenant le bridage et le collage.

A la figure 2, on a représenté un détail de réalisation du moule de l'invention. La base du moule dans laquelle s'accumule du liquide est percée de canaux réciproques dans le corps 4 et le moyen de masquage 5 de façon à réaliser une mise à l'air libre.

Pour réaliser cette fonction, les rebords inférieurs 18 et 19 de la ceinture 5 et du corps 4, qui sont disposés à la base du moule en fonctionnement normal, sont percés de canaux d'évacuation de la pressure et des liquides qui se trouvent toujours dans l'angle du fond du moule. A cet effet, le dièdre inférieur 30 du corps 4 est percé de canaux inclinés 31 qui permettent, lorsqu'une pression apparaît, de faire remonter les liquides intérieurs à la chambre de pressure. Une extrêmité de ces canaux 31 débouche dans des canaux 32 pratiqués dans le rebord 18 de la ceinture de masquage 5. L'autre extrêmité de chaque canal 32 dans le rebord 18 débouche à l'air libre pour réaliser une mise à l'air de l'intérieur de la chambre de pressure. Le dièdre 30 est, dans un mode de réalisation représenté à la figure 2, de forme inclinée, de façon à affecter dans la coupe de la figure 2, une forme de coin avec la claie, coin dans le volume duquel, le liquide sous pression s'accumule puis s'échappe par le haut, dans lequel débouche l'extrêmité du canal 31.

D'autres dispositions sont possibles pour réaliser le moyyen de l'invention et sont compris dans la portée des revendications annexées.

## Revendications

1. Moule à fromage du genre comportant au moins un corps (4) réalisé en un matériau au moins localement microporeux, caractérisé en ce que le moule comporte de plus un moyen (5) pour masquer localement des microperforations du corps (4).

2. Moule selon la revendication 1, caractérisé en ce que le moyen (5) de masquage local de microperforations comporte un moyen (16, 18) de déplacement de façon à, sur commande, déplacer le moyen de masquage (5), notamment lors du nettoyage du moule, pour atteindre les microperforations masquées.

3. Moule selon l'une des revendications précédentes, caractérisé en ce que le moyen de masquage est constituée par une ceinture (5) qui recouvre la face externe du corps (4).

4. Moule selon la revendication 3, caractérisé en ce que la zone de microperforations recouverte par la ceinture (5) sur le corps (4) correspond sensiblement à la hauteur du fromage une fois la pressure exprimée.

5. Moule selon les revendications 2 et 3, caractérisé en ce que le moyen de déplacement est monté sur la ceinture (5) et comporte des rebords (16, 18) qui viennent en butée avec un rebord réciproque (19, 21) du corps (4) quand la ceinture (5) est déplacée à l'une des extrêmités des déplacements commandés sur le corps (4).

6. Moule selon la revendication 3, caractérisé en ce que la ceinture est constituée par une bande de plastique relativement souple initialement ouverte radialement et resserrée autour du corps par des brides de serrage.

7. Moule selon la revendication 3, caractérisé en ce que corps (4) et ceinture (5) sont réalisés chacun en deux parties séparées par un plan perpendiculaire à un axe de symétrie (3), les parties réciproques du corps (4) et de la ceinture (5) étant installées l'une sur l'autre puis, chaque partie du corps (4) étant solidarisée à l'autre partie du corps (4) et chaque partie de la ceinture étant solidarisée à l'autre partie de la ceinture (5) par des moyens de liaison, comme des brides, de la colle ou un collage par ultrasons.

8. Moule selon la revendication 1, caractérisé en ce que la base du moule dans laquelle s'accumule du liquide est percée de canaux réciproques (31, 32) dans le corps (4) et le moyen de masquage (5) de façon à réaliser une mise à l'air libre.

9. Moule selon la revendication 8, caractérisé en ce que le dièdre (30) de la base du corps (4) est réalisé en forme de coin dans le volume duquel, le liquide sous pression s'accumule, puis s'échappe par le haut, dans lequel débouche l'extrêmité d'un canal (31) percé dans le corps (4) et qui débouche dans un canal (32) percé dans la ceinture (5) qui débouche à l'air libre.
